# EUROPEAN PATENT SPECIFICATION

(11) **EP 4 538 065 B1**
(45) Date of publication and mention of the grant of the patent: **21.01.2026**
(21) Application number: 24178388.5
(22) Date of filing: 28.05.2024
(51) Int. Cl.: B60C 11/04, B60C 11/13

(54) **HEAVY DUTY PNEUMATIC TIRE TREAD HAVING A NOISE REDUCTION AND STONE REJECTION STRUCTURE**
SCHWERLASTLUFTREIFENLAUFFLÄCHE MIT GERÄUSCHMINDERUNG UND STEINAUSWURFSTRUKTUR
BANDE DE ROULEMENT DE PNEUMATIQUE POUR POIDS LOURDS AYANT UNE STRUCTURE DE RÉDUCTION DE BRUIT ET DE REJET DE CAILLOUX

(30) Priority: 12.10.2023 KR 20230135787
(43) Date of publication of application: 16.04.2025
(73) Proprietor: Kumho Tire Co., Inc., Gwangju 62392 (KR)
(72) Inventor: Lee, Jongseo, 16287 Suwon-si (KR)
(74) Representative: IPrime Rentsch Kaelin AG

(56) References cited:
- JP-A- 2001 030 715
- KR-B1- 101 445 936
- KR-Y1- 200 444 974
- US-A1- 2017 341 473
- US-A1- 2023 031 108
- US-B2- 11 059 328

## Description

### CROSS REFERENCE TO RELATED APPLICATIONS

This application claims the benefit of Korean Patent Application No. 10-2023-0135787 filed on October 12, 2023

### BACKGROUND OF THE INVENTION

### 1. Field of the Invention

The present invention relates to a heavy duty pneumatic tire tread having a noise reduction and stone rejection structure, and more specifically, to a heavy duty pneumatic tire tread having a noise reduction and stone rejection structure, in which noise reduction fences and stone rejecting protrusions are formed in a longitudinal groove of the pneumatic tire tread, such that tire performance may be improved by reducing noise generated inside the longitudinal groove and preventing a stone from getting stuck in the tire.

### 2. Description of the Related Art

Unless otherwise indicated herein, the contents described in this section are not prior art to the claims of the present application, and inclusion in this section is not admitted to be the prior art.

In the case of not only a general pneumatic tire but also a pneumatic tire for heavy duty used in buses and trucks, the tire includes shoulder portions, sidewalls and bead portions formed on both sides in a width direction of the tire with a tread part interposed therebetween while defining an internal space into which compressed air can be injected.

Among configurations of the above-described tire, the tread part corresponds to a rubber layer composed of grooves, blocks, and sipes, and serves to support the load of a vehicle body as the only portion of the tire which directly comes into contact with the ground. In addition, since the tread part continuously receives the load of the vehicle body, it is necessary to have strong friction performance, drainage performance, noise performance, and fatigue resistance, and sufficiently withstand an external impact applied thereto.

Here, the groove formed in the tread corresponds to a longitudinal groove dug in a circumferential direction of the tread, which is the driving direction of a vehicle, and is designed as a pattern to increase a drainage ability for safe braking on a rainy road.

However, when a vehicle is generally driven on a road, a pipe or tube shape is formed as main grooves come into contact with the ground, and in this case, there is a problem in that air column resonance sounds are generated due to the air stream flowing through the pipe. In addition, when a stone or foreign substance is stuck in the groove of the tire pattern during driving of the tire on the road, it penetrates into a bottom of the groove and damages a belt layer, thereby becoming a major factor in causing tread rupture and tire puncture.

In this regard, Korean Patent Registration Publication No. 10-2011072 (published on August 14, 2019) discloses a tread shoulder block structure for a tire which may reduce abnormal wear and generation of noise in the tread shoulder block.

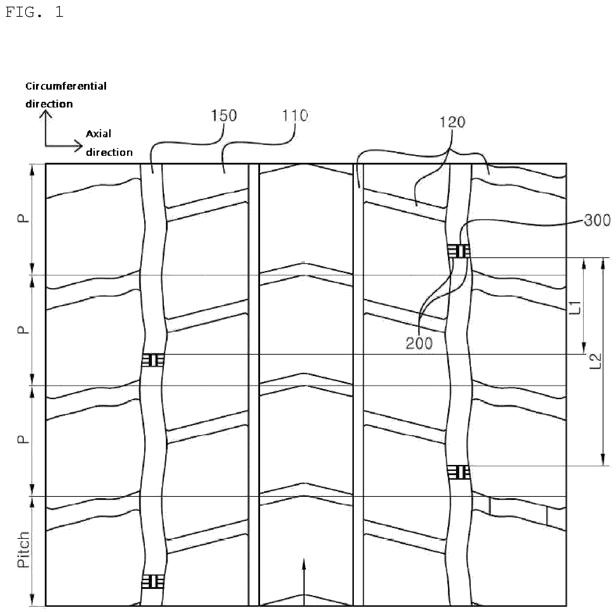

However, as shown in FIG. 1 of the publication, the above prior art may only reduce abnormal wear and generation of noise in the tread shoulder block portion by forming reinforcing protrusions in a transverse groove of the shoulder tread of the tire, but still has conventional problems in that air column resonance sounds are generated due to the air flow generated by a pipe or tube shape formed when main longitudinal grooves in a driving direction of the tire come into contact with the ground, and in that stones are stuck in the tread, which could not be comprehensively and effectively solved in the art.

### Prior Art Document

Patent Document (Patent Document 1) Korean Patent Registration Publication No. 10-2011072 (published on August 14, 2019).
US2023031108A1 relates to a pneumatic vehicle tyre having a tread with at least one, in particular straight, circumferential groove which is formed at profile depth, is delimited by groove flanks and a groove base of U-shaped cross section, and has a width which is ascertained at the tread periphery in the axial direction.
US11059328B2 relates to a tire that comprises a tread portion provided with at least one longitudinal groove extending in a tire circumferential direction.
KR101445936B1 relates to a pneumatic tire consisting of multiple grooves formed respectively between multiple tread blocks and above multiple tread blocks.
US2017341473A1 relates to a tread for a tire. This tread having a tread surface intended to come into contact with a roadway and comprising at least one groove of width W and depth P delimited by two facing lateral walls, these lateral walls being connected together by a groove bottom.
JP2001030715A relates to a pneumatic tire that has shoulder blocks arranged on a tread surface in a tire radial direction with lateral grooves, in which bottom-up portions are provided, disposed between the shoulder blocks.
KR200444974Y1 relates to a pneumatic tire having stone-ejector reinforced with a prejected member.

### SUMMARY OF THE INVENTION

The present invention is intended to improve the conventional problems in consideration of the above-described circumstances, and it is an object of the present invention to provide a heavy duty pneumatic tire tread having a noise reduction and stone rejection structure, in which noise reduction parts and a stone rejection part are formed in a longitudinal groove of the pneumatic tire tread, thereby the problems in that air column resonance sounds are generated due to the air flow generated by a pipe or tube shape formed when main longitudinal grooves in a driving direction of the tire come into contact with the ground, and in that stones are stuck in the tread may be comprehensively and effectively solved, and thereby improving the tire performance.

In addition, it is not limited to the technical problems as described above, and it is obvious that another technical problem may be derived from the following description.

To achieve the above objects, according to an aspect of the present invention, there is provided a tread structure of a heavy duty pneumatic tire having a noise reduction and stone rejection structure, the tread of a pneumatic tire including: at least one or more main longitudinal groove structures in which grooves are formed in a circumferential direction of the tire; and noise reduction parts on both side walls and a stone rejection part at a center, which are formed in the main longitudinal groove in symmetrical vertically with respect to a center in a circumferential direction of the groove, wherein the noise reduction part includes a fence base at a lower portion and a fence post at an upper portion thereof, and the fence base and an upper end of the stone rejection part have the same height, wherein the noise reduction part and the stone rejection part may be installed to cross each other in left and right longitudinal grooves, and one or more these parts may be arranged in a range of 150 to 200 mm of a circumferential ground length.

According to a preferred embodiment of the present invention, a height H1 of the noise reduction part may be formed in a size ranging from 60 to 65% of a total height H0 of a groove-defining part of the longitudinal groove, and each of top widths w1 and w2 of the fence post may be formed in a range of 30 to 33% of a top width W of the groove-defining part of the longitudinal groove.

According to a preferred embodiment of the present invention, a width w3 of the stone rejection part may be formed in a range of 17 to 20% of the top width W of the groove-defining part of the longitudinal groove.

According to a preferred embodiment of the present invention, the height H1 of the noise reduction part may be a sum of a height h1 of the fence base and a height h2 of the fence post, and the height h1 of the fence base may be in a range of 16 to 21% of the height H1 of the noise reduction part, and the height h2 of the fence post may be in a range of 79 to 84% of the height H1 of the noise reduction part.

According to a preferred embodiment of the present invention, a circumferential thickness T1 of the fence post may be in a range of 2 to 4 mm, and respective circumferential thicknesses T2 and T3 of the fence base may be the same as each other in a range of 8 to 12 mm.

According to a preferred embodiment of the present invention, the circumferential thickness T2 of the fence base may be greater than the height h1 of the fence base.

According to a preferred embodiment of the present invention, each of the circumferential thicknesses T2 and T3 of the fence base and a circumferential length of the stone rejection part may be the same as each other.

According to the present invention, by forming noise reduction parts and stone rejection parts in a space within the noise reduction part and the stone rejection part formed in the inner space of the main longitudinal groove according to an embodiment of the present invention;
FIG. 3 is a plan view illustrating the noise reduction part and the stone rejection part formed in the inner space of the main longitudinal groove according to an embodiment of the present invention; and
FIG. 4 is a three-dimensional perspective view illustrating the noise reduction part and the stone rejection part according to an embodiment of the present invention.

### DETAILED DESCRIPTION OF THE INVENTION

Hereinafter, a heavy duty pneumatic tire tread having a noise reduction and stone rejection structure according to a preferred embodiment will be described with reference to the accompanying drawings.

For reference, in the drawings described below, each component is omitted or schematically illustrated for convenience and clarity, and the size of each component does not reflect an actual size. In addition, the same reference numerals are denoted to the same components throughout the specification, and reference numerals for the same components in individual drawings will be omitted.

When describing an embodiment of the present invention with reference to FIG. 1 to 3, a heavy duty pneumatic tire tread 100 having a noise reduction and stone rejection structure includes at least one main longitudinal groove 150 formed in a tread surface 110 formed with transverse incisions 120 as a groove in a circumferential direction of the tire in a tread structure of the pneumatic tire. The main longitudinal groove 150 has noise reduction parts 200 formed on both side walls 160 and a stone rejection part 300 formed at a center thereof in symmetrical vertically with respect to a center in the circumferential direction of the groove. The noise reduction part 200 includes a fence base 210 at a lower portion and a fence post 220 at an upper portion thereof, and the fence base 210 and an upper end of the stone rejection part 300 have the same height.

More specifically, as shown in FIG. 1 to 4, the noise reduction parts 200 and the stone rejection part 300, which are an embodiment of the present invention, have an overall integrated W shape when viewed from the front, and the noise reduction parts 200 are formed on left and right sides about the stone rejection part 300 formed at a central portion.

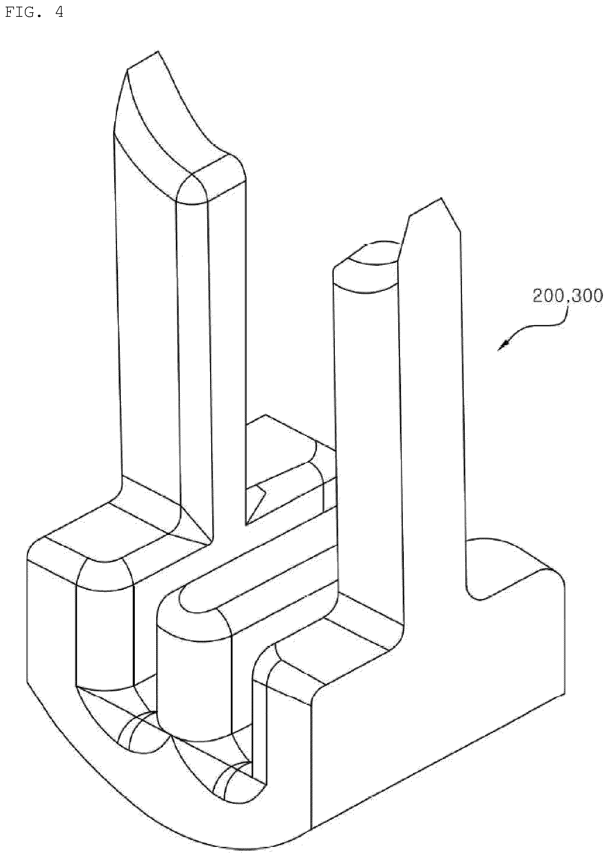

In addition, the noise reduction parts 200 and the stone rejection part 300 are formed in the main longitudinal groove as described above, and the noise reduction parts 200 are formed integrally with the both side walls 160 of the longitudinal groove 150, and are arranged in symmetrical vertically with respect to the center in the circumferential direction of the longitudinal groove. As shown in FIG. 4, the noise reduction parts 200 and the stone rejection part 300 may have an overall rectangular block shape when viewed from the top. In addition, each corner or end of the noise reduction part 200 and the stone rejection part 300 may be rounded to have a predetermined radius of curvature.

The noise reduction parts 200 may have an overall U-shape when viewed from the front, and the stone rejection part 300 is formed at the center to prevent foreign substances such as stones from getting stuck. But, alternately, it is also possible to reduce the noise by forming only the noise reduction parts 200 without the stone rejection part 300.

In addition, as shown in FIG. 4, the noise reduction part 200 is divided into an upper portion and a lower portion, and may include the noise reduction fence base 210 at the lower portion and the noise reduction fence post 220 at the upper portion.

The height of the noise reduction fence base 210 at the lower portion and the height of the stone rejection part 300 are formed at approximately the same level, and the heights thereof may be adjusted appropriately. In addition, the noise reduction fence post 220 at the upper portion is erected vertically at a center in the longitudinal direction of the fence base 210 and has constant fence width and height, such that the noise may be blocked or reduced by the noise reduction fence post 220.

In other words, noise such as an air column resonance sound, which is generated due to the air flow generated by a pipe or tube shape formed when main longitudinal grooves in a driving direction of the tire come into contact with the ground, may be effectively blocked by forming a kind of barrier obtained by the width and height of the noise reduction fence post 220.

According to a preferred embodiment of the present invention, a height (also referred to as a "fence height") H1 of the noise reduction part 200 may be formed in a size ranging from 60 to 65% of a total height H0 of a groove-defining part of the longitudinal groove 150, and each of top widths w1 and w2 of the fence post 220 may be formed in a range of 30 to 33% of a top width W of the groove-defining part of the longitudinal groove 150.

The above characteristics are supported by the noise reduction effect (dB) according to changes in the fence height H1 of the noise reduction part 200 and the width w of the fence post 220, as listed in results of a test conducted by the inventors of the present invention (see Table 1 below).

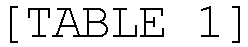

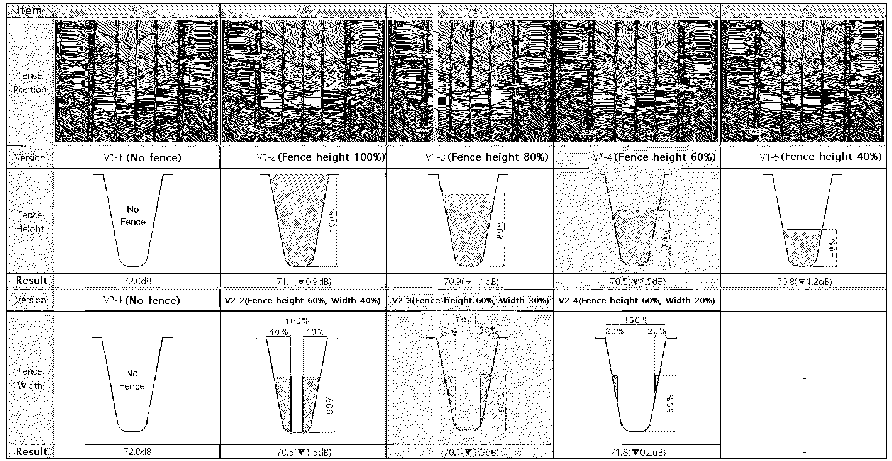

More specifically, as shown in Table 1, it can be seen that when looking at the case where there is no noise reduction part 200, the total noise is 72.0 dB, whereas in the case where the noise reduction part 200 is present, the overall noise is reduced by 0.9 to 1.9 dB while there is a difference depending on the height and width.

In addition, in the case of the noise reduction part 200, there is a difference depending on the change in the fence height H1 and the width w. That is, as shown in Table 1, it can be seen that, in each case where the fence height H1 is 100%, 80%, 60%, and 40% of the total height H0 of the groove-defining part of the longitudinal groove, there is the best noise reduction effect of 1.5 dB in the case where a height ratio H1/H0 is in the range of 60 to 65%.

If the height ratio H1/H0 of the noise reduction part 200 fence is designed to be 100%, friction noise in contact with the ground will occur, which is the same as the principle in which the groove is completely blocked by the noise reduction fence, thereby resulting in pumping noise.

In addition, when the height ratio H1/H0 is set to be greater than 65%, cracks and fractures may occur in the noise reduction unit 200 due to flow of the block in a driving direction and an axial during initial driving. In other words, as shown in Table 2, there is a risk that the noise reduction part 200 fence may be torn due to the initial Heel & Toe phenomenon of the block type pattern (diagonal wear of the block, left black portion and right white portion in Table 2).

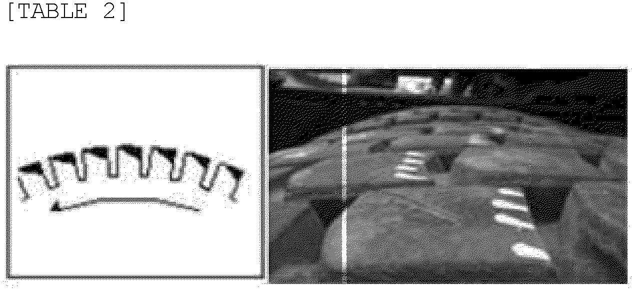

If the height ratio H1/H0 is set to less than 60%, the bottom width of the groove is smaller than the top width of the groove due to the formation of a certain angle on the groove wall, thereby making it is difficult to install the noise reduction part, while reducing effects thereof.

Further, in the change of the fence width w of the noise reduction part 200, as shown in Table 1, it can be seen that, in each case where the top width w of the fence post 220 is 20%, 30%, and 40% of the top width W of the groove-defining part of the longitudinal groove 150, there is the best noise reduction effect of 1.9 dB in the vicinity where a width ratio w/W is 30%.

According to the test results shown in Table 1 as above, in the present invention, it is preferable to design and form the noise reduction part 200 in a size with a height ratio H1/H0 and a width ratio w/W of about 60% and 30%, respectively.

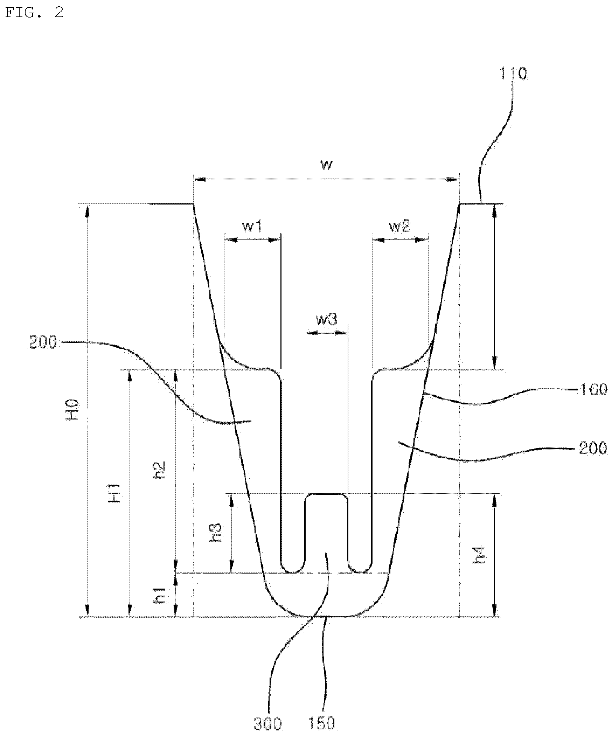

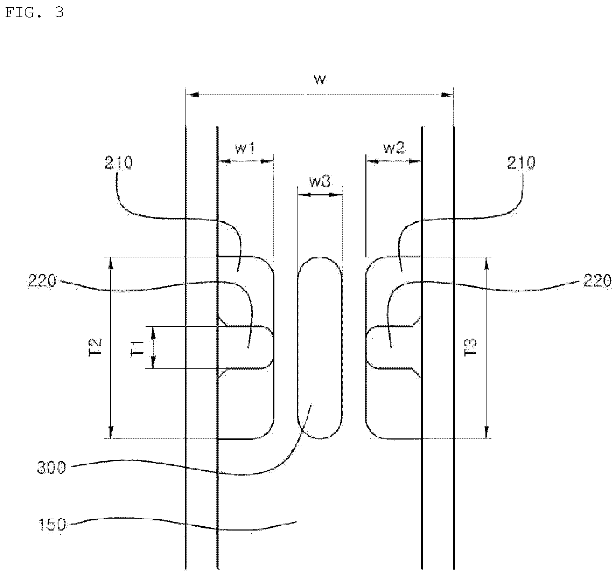

According to a preferred embodiment of the present invention, a width w3 of the stone rejection part 300 may be formed in a range of 17 to 20% of the top width W of the groove-defining part of the longitudinal groove 150. That is, as shown in FIGS. 2 and 3, the width w3 of the stone rejection part 300 is preferably in the range of 17 to 20% of the top width W of the groove-defining part of the longitudinal groove. If the width is narrower than the above range, it is difficult to prevent foreign substances such as stones from getting stuck. If the width is greater than the above range, it is good to prevent stones from getting stuck, but the noise reduction effect is canceled out.

According to a preferred embodiment of the present invention, as shown in FIGS. 2 and 4, the height h2 of the fence post 220 is preferably greater than the height h1 of the fence base 210. This is intended to maximize the noise reduction effect while stably supporting the fence post 220 by the fence base 210. Accordingly, the height h1 of the fence base 210 is preferably in a range of 16 to 21% of the height H1 of the noise reduction part 200, and the height h2 of the fence post 220 is preferably in a range of 79 to 84% of the height H1 of the noise reduction part 200.

According to a preferred embodiment of the present invention, as shown in FIGS. 3 and 4, a circumferential thickness T1 of the fence post 220 may be in a range of 2 to **4 mm.** In other words, if the thickness T1 of the fence post 220 is less than 2 mm, the mechanical rigidity of the post fence of the noise reduction part 200 is decreased, such that there is a risk of crack phenomenon, and if the thickness T1 is greater than 4 mm, the deformation of the post fence is reduced and it becomes harder, thereby causing a decrease in the noise reduction effect.

In addition, according to a preferred embodiment of the present invention, respective circumferential (longitudinal) thicknesses T2 and T3 of the fence base 210 may be the same as each other in a range of 8 to 12 **mm.** That is, as shown in FIG. 1, the block type longitudinal groove 150 has a Zig-Zag-shaped average line rather than a straight line. This average line commonly has a tangent line forming an angle of 0 to 45 degrees in the longitudinal direction at each point.

Here, if the thicknesses T2 and T3 are less than 8 mm, the mechanical rigidity of the fence base 210 may be reduced, and if they exceeds 12 mm, unnecessary rubber bodies (gauge) may be incorporated to affect belt waving, which can lead to imbalance in the footprint shape and reduction in durability.

In addition, according to a preferred embodiment of the present invention, the circumferential thickness T2 of the fence base 210 is greater than the height h1 of the fence base. In other words, if the thickness T2 is equal to or smaller than the height h1 of the fence base, the mechanical strength of the noise reduction part 200 fence is reduced.

Further, according to a preferred embodiment of the present invention, the noise reduction part 200 and the stone rejection part 300 are installed to cross each other with respect to the left and right longitudinal grooves 150, and one or more these parts may be arranged in a range of 150 to 200 mm of a circumferential ground length.

That is, as shown in Table 3 below and FIG. 1, one or more, preferably two or more noise reduction parts 200 and stone rejection parts 300 may be arranged in the longitudinal grooves 150 on the left and right sides in the range of 150 to 200 mm which is a common circumferential ground length. It is more preferable that these parts are arranged so as to cross and face each other in terms of the noise reduction effect.

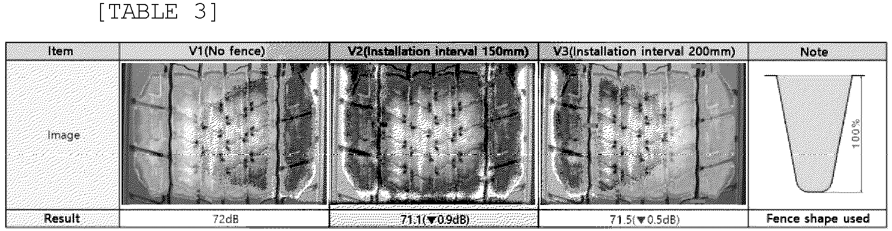

Although preferred embodiments of the present invention have been described with reference to the accompanying drawings, the embodiments and drawings described and illustrated in the present disclosure are simply the most preferred embodiment and do not represent all the technical sprites of the present invention, and it will be understood that various modifications and equivalents may be made to take the place of the embodiments at the time of filling the present application. Thus, it is clear that the above-described embodiments are illustrative in all aspects and do not limit the present invention. The scope of the present invention is defined by the following claims rather than by the detailed description of the embodiment. It shall be understood that all modifications and embodiments conceived from the meaning and scope of the claims and their equivalents are included in the scope of the present invention .

### Description of Reference Numerals

100: Pneumatic tire tread
110: Tread surface
120: Transverse incision
150: Main longitudinal groove (longitudinal groove-defining part)
160: Walls of longitudinal groove
200: Noise reduction part
210: Fence base
220: Fence post
300: Stone rejection part
H0: Total height of groove-defining part of longitudinal groove
H1: Height of noise reduction part
h1: Height of the fence base
h2: Height of fence post
W: Top width of groove-defining part of longitudinal groove
w1, w2: Top width of the fence post
w3: Width of stone rejection part
T1: Thickness of fence post
T2, T3: Thickness of fence base

## Claims

1. A tread structure of a heavy duty pneumatic tire having a noise reduction and stone rejection structure, the tread of a pneumatic tire comprising:
at least one or more main longitudinal groove structures (150) in which grooves are formed in a circumferential direction of the tire; and
noise reduction parts (200) on both side walls and a stone rejection part (300) at a center, which are formed in the main longitudinal groove (150) in symmetrical vertically with respect to a center in a circumferential direction of the groove,
wherein the noise reduction part (200) includes a fence base (210) at a lower portion and a fence post (220) at an upper portion thereof, and
the fence base (210) and an upper end of the stone rejection part (300) have the same height,
**characterized in that** the noise reduction part (200) and the stone rejection part (300) are installed to cross each other in left and right longitudinal grooves, and one or more these parts are arranged in a range of 150 to 200 mm of a circumferential ground length.

2. The tread of a pneumatic tire according to claim 1, wherein a height H1 of the noise reduction part (200) is formed in a size ranging from 60 to 65% of a total height H0 of a groove-defining part of the longitudinal groove (150), and each of top widths w1 and w2 of the fence post (220) is formed in a range of 30 to 33% of a top width W of the groove-defining part of the longitudinal groove (150).

3. The tread of a pneumatic tire according to claim 1, wherein a width w3 of the stone rejection part (300) is formed in a range of 17 to 20% of the top width W of the groove-defining part of the longitudinal groove (150).

4. The tread of a pneumatic tire according to claim 2, wherein the height H1 of the noise reduction part (200) is a sum of a height h1 of the fence base (210) and a height h2 of the fence post (220), and
the height h1 of the fence base (210) is in a range of 16 to 21% of the height H1 of the noise reduction part (200), and the height h2 of the fence post (220) is in a range of 79 to 84% of the height H1 of the noise reduction part (200).

5. The tread of a pneumatic tire according to claim 4, wherein a circumferential thickness T1 of the fence post (220) is in a range of 2 to 4 mm, and respective circumferential thicknesses T2 and T3 of the fence base (210) are the same as each other in a range of 8 to 12 mm.

6. The tread of a pneumatic tire according to claim 5, wherein the circumferential thickness T2 of the fence base (210) is greater than the height h1 of the fence base (210).

7. The tread of a pneumatic tire according to claim 5, wherein each of the circumferential thicknesses T2 and T3 of the fence base (210) and a circumferential length of the stone rejection part (300) are the same as each other.

## Patentansprüche

1. Laufflächenstruktur eines Schwerlastluftreifens mit einer Geräuschminderungs- und Steinabweisungsstruktur, wobei die Lauffläche eines Luftreifens umfasst:
mindestens eine oder mehrere Hauptlängsrillenstrukturen (150), wobei die Rillen in Umfangsrichtung des Reifens ausgebildet sind; und
Geräuschminderungsteile (200) an beiden Seitenwänden und ein Steinabweisungsteil (300) in der Mitte, die in der Hauptlängsrille (150) symmetrisch vertikal in Bezug auf eine Mitte in Umfangsrichtung der Rille ausgebildet sind,
wobei das Geräuschminderungsteil (200) eine Zaunbasis (210) an einem unteren Abschnitt und einen Zaunpfosten (220) an einem oberen Abschnitt davon umfasst, und
die Zaunbasis (210) und ein oberes Ende des Steinabweisungsteils (300) die gleiche Höhe aufweisen,
**dadurch gekennzeichnet, dass** der Geräuschminderungsteil (200) und der Steinabweisungsteil (300) so angeordnet sind, dass sie sich in links- und rechtsseitigen Längsrillen kreuzen, und dass ein oder mehrere dieser Teile in einem Bereich von 150 bis 200 mm einer Umfangslänge am Boden angeordnet sind.

2. Lauffläche eines Luftreifens gemäss Anspruch 1, wobei eine Höhe H1 des Geräuschminderungsteils (200) in einer Grösse von 60 bis 65 % einer Gesamthöhe H0 eines die Längsrille (150) definierenden Teils ausgebildet ist, und jede der oberen Breiten w1 und w2 des Zaunpfostens (220) in einem Bereich von 30 bis 33 % einer oberen Breite W des die Rille definierenden Teils der Längsrille (150) ausgebildet ist.

3. Lauffläche eines Luftreifens nach Anspruch 1, wobei eine Breite w3 des Steinabweisungsteils (300) in einem Bereich von 17 bis 20 % der oberen Breite W des die Längsrille (150) definierenden Abschnitts ausgebildet ist.

4. Lauffläche eines Luftreifens nach Anspruch 2, wobei die Höhe H1 des Geräuschminderungsteils (200) die Summe aus einer Höhe h1 der Zaunbasis (210) und einer Höhe h2 des Zaunpfostens (220) ist und
die Höhe h1 der Zaunbasis (210) in einem Bereich von 16 bis 21 % der Höhe H1 des Geräuschminderungsteils 200) liegt und die Höhe h2 des Zaunpfostens (220) in einem Bereich von 79 bis 84 % der Höhe H1 des Geräuschminderungsteils (200) liegt.

5. Lauffläche eines Luftreifens gemäss Anspruch 4, wobei eine Umfangsdicke T1 des Zaunpfostens (220) in einem Bereich von 2 bis 4 mm liegt und die jeweiligen Umfangsdicken T2 und T3 der Zaunbasis (210) in einem Bereich von 8 bis 12 mm gleich sind.

6. Lauffläche eines Luftreifens nach Anspruch 5, wobei die Umfangsdicke T2 der Zaunbasis (210) grösser ist als die Höhe h1 der Zaunbasis (210).

7. Lauffläche eines Luftreifens nach Anspruch 5, wobei die Umfangsdicken T2 und T3 der Zaunbasis (210) und die Umfangslänge des Steinabweisungsteils (300) jeweils gleich sind.

## Revendications

1. Structure de bande de roulement d'un pneumatique à usage intensif ayant une structure de réduction du bruit et d'éjection de gravillons, la bande de roulement du pneumatique comprenant :
au moins une ou plusieurs structures de rainures longitudinales principales (150) dans lesquelles des rainures sont formées dans une direction circonférentielle du pneumatique ; et
des parties de réduction du bruit (200) sur les deux parois latérales et une partie d'éjection de gravillons (300) au centre, qui sont formées dans la rainure longitudinale principale (150) de manière symétrique verticalement par rapport à un centre dans une direction circonférentielle de la rainure,
dans laquelle la partie de réduction du bruit (200) comprend une base de cloison (210) dans une partie inférieure et un montant de cloison (220) dans une partie supérieure de celle-ci, et
la base de cloison (210) et une extrémité supérieure de la partie d'éjection de gravillons (300) ont la même hauteur,
**caractérisée en ce que** la partie de réduction du bruit (200) et la partie d'éjection de gravillons (300) sont installées de manière à se croiser mutuellement dans des rainures longitudinales gauche et droite, et une ou plusieurs de ces parties sont agencées dans une plage de 150 à 200 mm d'une longueur circonférentielle au sol.

2. Bande de roulement d'un pneumatique selon la revendication 1, dans laquelle une hauteur H1 de la partie de réduction du bruit (200) est formée dans une taille comprise entre 60 et 65 % d'une hauteur totale H0 d'une partie de définition de rainure de la rainure longitudinale (150), et chacune parmi des largeurs supérieures w1 et w2 du montant de cloison (220) est formée dans une plage de 30 à 33 % d'une largeur supérieure W de la partie de définition de rainure de la rainure longitudinale (150).

3. Bande de roulement d'un pneumatique selon la revendication 1, dans laquelle une largeur w3 de la partie d'éjection de gravillons (300) est formée dans une plage de 17 à 20 % de la largeur supérieure W de la partie de définition de rainure de la rainure longitudinale (150).

4. Bande de roulement d'un pneumatique selon la revendication 2, dans laquelle la hauteur H1 de la partie de réduction du bruit (200) est une somme d'une hauteur h1 de la base de cloison (210) et d'une hauteur h2 du montant de cloison (220), et
la hauteur h1 de la base de cloison (210) est comprise dans une plage de 16 à 21 % de la hauteur H1 de la partie de réduction du bruit (200), et la hauteur h2 du montant de cloison (220) est comprise dans une place de 79 à 84 % de la hauteur H1 de la partie de réduction du bruit (200).

5. Bande de roulement d'un pneumatique selon la revendication 4, dans laquelle une épaisseur circonférentielle T1 du montant de cloison (220) est comprise dans une plage de 2 à 4 mm, et les épaisseurs circonférentielles respectives T2 et T3 de la base de cloison (210) sont identiques entre elles et sont comprises dans une plage de 8 à 12 mm.

6. Bande de roulement d'un pneumatique selon la revendication 5, dans laquelle l'épaisseur circonférentielle T2 de la base de cloison (210) est supérieure à la hauteur h1 de la base de cloison (210).

7. Bande de roulement d'un pneumatique selon la revendication 5, dans laquelle chacune des épaisseurs circonférentielles T2 et T3 de la base de cloison (210) et une longueur circonférentielle de la partie d'éjection de gravillons (300) sont identiques entre elles.
